# EUROPEAN PATENT APPLICATION

(11) **EP 1 109 147 A1**
(43) Date of publication of application: **20.06.2001**
(21) Application number: 00310485.8
(22) Date of filing: 27.11.2000
(51) Int. Cl.: G09G 3/32

(54) **System for colour illumination of a display**

(30) Priority: 17.12.1999 US 465914
(71) Applicant: NOKIA MOBILE PHONES LTD., 02150 Espoo (FI)
(72) Inventor: Rautiainen, Juha T., 90550 Oulu (FI); Niemitalo, Paavo, SF 90820 Kello (FI); Laukkanen, Marko, SF 90550 Oulu (FI); Mikkonen, Riku, SF 90100 Oulu (FI)
(74) Representative: Read, Matthew Charles

(57) **Abstract**

A system for controlling color illumination of a display region for an electronic device comprises an EMF source, a first LED for emitting light of a first color, a second LED for emitting light of a second color, and a controller for operating the first and second LEDs in a coordinated manner to selectively project into the display region a desired third color different from either the first color or the second color. The system includes a user interface connected to the controller for adjusting the duty ratios for the first and second LEDs or for adjusting current flow to each of the LEDs. A display module for displaying information pertinent to the operation of the electronic device includes an LCD having a display region for displaying the information pertinent to the operation of the electronic device, a light guide for projecting light from the first LED and from the second LED to the display region of the LCD, and a reflector for projecting light from the light guide into the display region of the LCD. A first glass sheet overlies the LCD, a second glass sheet is intermediate the light guide and the LCD, and a diffuser is positioned intermediate the light guide and the second glass sheet. In another embodiment, the LEDs may be replaced with layers of luminescent material, each layer capable of emitting light of a different color.

## Description

The present invention relates to electronic devices including a display for relating information pertinent to the operation of the device and, more particularly, to a system for selectively altering the color illumination of the display region of the electronic device.

It is well known for electronic devices having a wide variety of capabilities to include display panels or regions to relate information pertinent to the operation of the device, whether they be radios, televisions, computers, or telephones, or a wide variety of other devices. In the past, it has been customary for such displays to be black and white or colorless. However, it would be desirable to impart color illumination to such display panels or regions.

In an embodiment of the invention there is provided, a system for controlling color illumination of a display region for an electronic device comprises an EMF source, a first LED for emitting light of a first color, a second LED for emitting light of a second color, and a controller for operating the first and second LEDs in a coordinated manner to selectively project into the display region a desired third color different from either the first color or the second color. The system includes a user interface connected to the controller for adjusting the duty ratios for the first and second LEDs or for adjusting current flow to each of the LEDs. A display module for displaying information pertinent to the operation of the electronic device includes an LCD having a display region for displaying the information pertinent to the operation of the electronic device, a light guide for projecting light from the first LED and from the second LED to the display region of the LCD, and a reflector for projecting light from the light guide into the display region of the LCD. A first glass sheet overlies the LCD, a second glass sheet is intermediate the light guide and the LCD, and a diffuser is positioned intermediate the light guide and the second glass sheet. In another embodiment, the LEDs may be replaced with layers of luminescent material, each layer capable of emitting light of a different color.

The main idea of this invention is to give to the user the opportunity of customizing the backlight color of the display and keypad, for example, of his mobile phone. This can be done by installing different color light emitting diodes (LEDs), for example, red, blue, and yellow, to illuminate the display and keypad, and by controlling those colors by pulse width modulation. To this end, a suitable user interface program is needed to control the modulation.

Throughout this disclosure, the term "back lighting" is not intended to be restrictive of the invention, but is intended to be descriptive of other lighting techniques as well such as front lighting and side lighting. The desired result can be achieved by using two or more different colors of LEDs and by controlling each color by its own control pin. For example, if two different colors of LEDs are available, namely green and red, the user is able to obtain yellow and orange on the display panel or region by changing the pulse width modulation of both colors.

A primary feature, then, of the present invention is the provision of a system for selectively altering the color illumination of the display region of an electronic device.

Another feature of the present invention is the provision of such a system including a first LED for emitting light of a first color, a second LED for emitting light of a second color, and a controller for operating the first and second LEDs in a coordinated manner to selectively project into a region of the display light of a desired third color different from either the first color or the second color.

Still another feature of the present invention is the provision of such a system which includes a user interface connected to the controller for adjusting the duty ratios for the first and second LEDs so as to project into the region of the display light of the desired third color.

Yet another feature of the present invention is the provision of such a system provided with a display module for displaying information pertinent to the operation of the electronic device including an LCD having a display region for displaying the information pertinent to the operation of the electronic device, a light guide for projecting light from the first LED and from the second LED to the display region of the LCD, and a reflector for projecting light from the light guide into the display region of the LCD, a first glass sheet overlying the LCD, a second glass sheet intermediate the light guide and the LCD, and a diffuser positioned intermediate the light guide and the second glass sheet.

Still a further feature of the present invention is the provision of such a system which utilizes layers of luminescent material, each layer capable of emitting light of a different color.

Yet a further feature of the present invention is the provision of such a system which is used for a mobile telephone.

Other and further features, advantages, and benefits of the invention will become apparent in the following description taken in conjunction with the following drawings. It is to be understood that the foregoing general description and the following detailed description are exemplary and explanatory but are not to be restrictive of the invention. The accompanying drawings illustrate one of the embodiments of the invention, and together with the description, serve to explain the principles of the invention in general terms. Like numerals refer to like parts throughout the disclosure.
Fig. 1 is a block diagram of a mobile station that is constructed and operated in accordance with this invention;
Fig. 2 is an elevational view of the mobile station shown in Fig. 1, and which further illustrates a cellular communication system to which the mobile station is bidirectionally coupled through wireless RF links;
Fig. 3 and 4 are schematic diagrams illustrating a system embodying the invention for controlling color illumination of a display region for an electronic device;
Fig. 5 is a graph illustrating a plurality of duty ratios which indicate the on and off times for energizing an LED;
Figs. 6A, 6B, and 6C are detail schematic diagrams depicting different techniques for adjusting the current flow to each of the LEDs according to the invention; and
Fig. 7 is a diagrammatic side elevation view of a display module construction according to the invention.

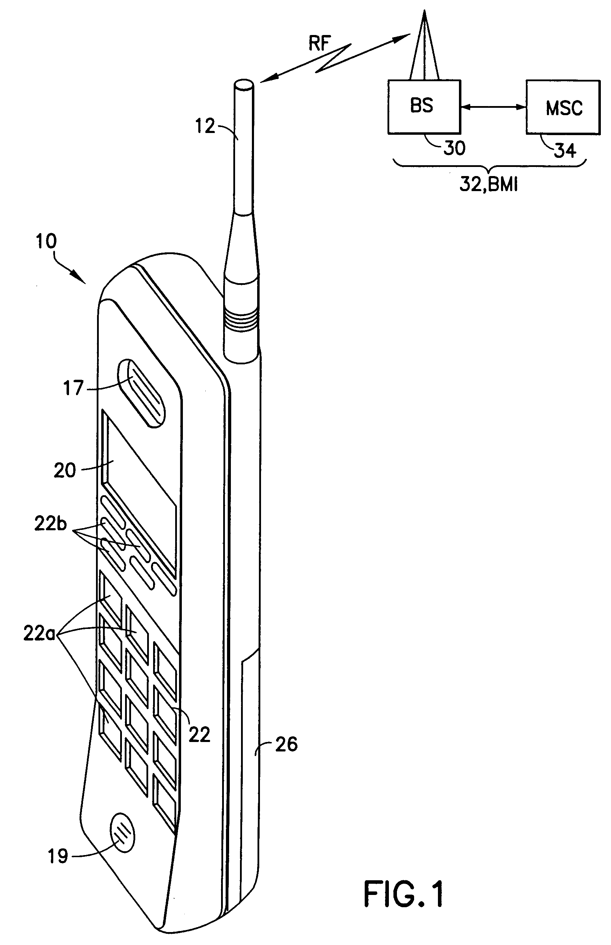

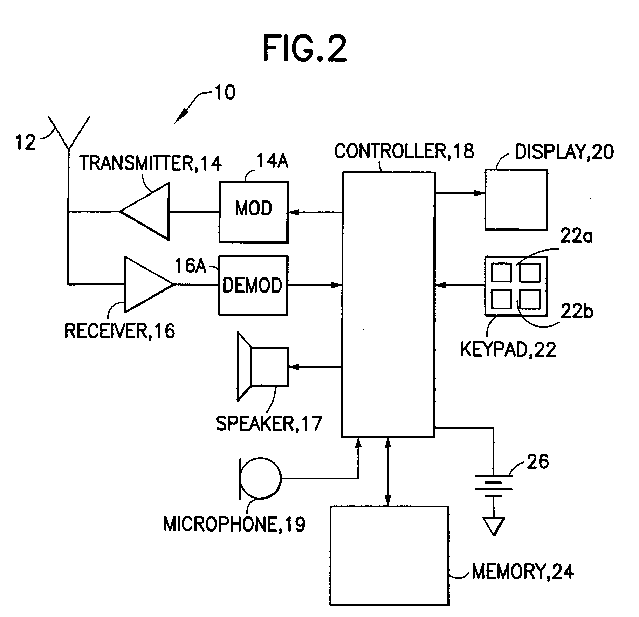

Reference is made to Figs. 1 and 2 for illustrating a wireless user terminal or mobile station 10, such as but not limited to a cellular radiotelephone or a personal communicator, that is suitable for practicing this invention. The mobile station 10 includes an antenna 12 for transmitting signals to and for receiving signals from a base site or base station 30. The base station 30 may be a part of a cellular network comprising a Base

Station/Mobile Switching Center/Interworking function (BMI) 32 that includes a mobile switching center (MSC) 34. The MSC 34 provides a connection to landline trunks when the mobile station 10 is involved in a call.

The mobile station includes a modulator (MOD) 14A, a transmitter 14, a receiver 16, a demodulator (DEMOD) 16A, and a controller 18 that provides signals to and receives signals from the transmitter 14 and receiver 16, respectively. These signals include signalling information in accordance with the air interface standard of the applicable cellular system, and also user speech and/or user generated data. The particular air interface standard is not germane to this invention.

It is understood that the controller 18 also includes the circuitry required for implementing the audio and logic functions of the mobile station. By example, the controller 18 may be comprised of a digital signal processor device, a microprocessor device, and various analog to digital converters, digital to analog converters, and other support circuits. The control and signal processing functions of the mobile station are allocated between these devices according to their respective capabilities.

A user interface includes a conventional earphone or speaker 17, a conventional microphone 19, a display 20, and a user input device, typically a keypad 22, all of which are coupled to the controller 18. The display 20 is described in further detail below. The keypad 22 includes the conventional numeric (0-9) and related keys (#,*) 22a, 15 and other keys 22b used for operating the mobile station 10. These other keys 22b may include, by example, a SEND key, various menu scrolling and soft keys, and a PWR key. The mobile station 10 also includes a battery 26 for powering the various circuits that are required to operate the mobile station.

The mobile station 10 also includes various memories, shown collectively as the memory 24, wherein are stored a plurality of constants and variables that are used by the controller 18 during the operation of the mobile station. For example, the memory 24 stores the values of various cellular system parameters and the number assignment module (NAM). An operating program for controlling the operation of controller 18 is also stored in the memory 24 (typically in a ROM device). The memory 24 may also store data, such as display color related data, as described below.

It should be understood that the mobile station 10 may be a vehicle mounted or a hand held device.

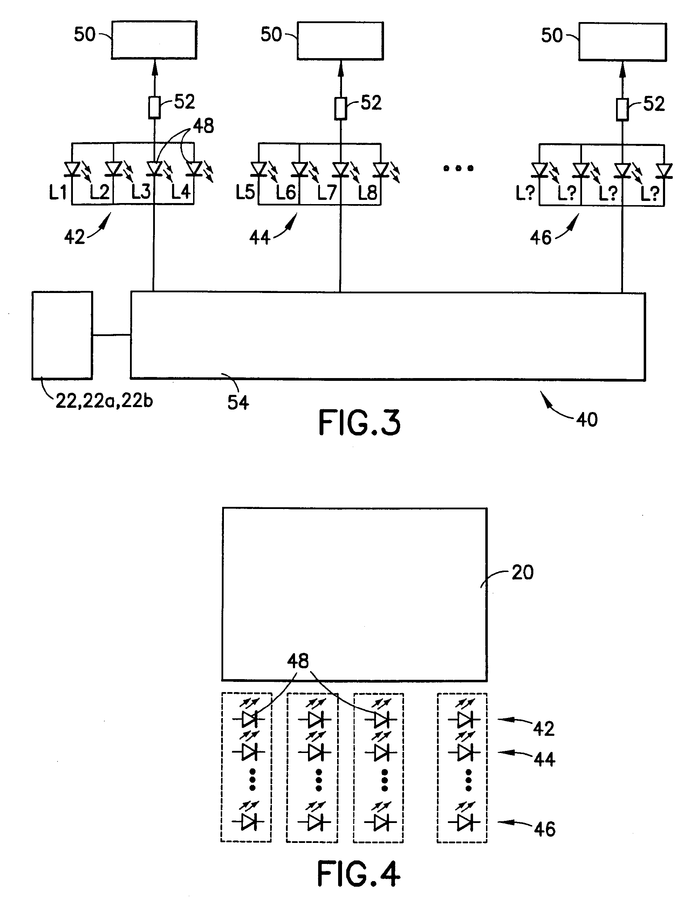

Turning now to Figs. 3 and 4, there is shown a schematic view of a system 40, incorporating features of the present invention, for controlling color illumination of the display region for an electronic device such as the mobile station 10, or phone. Although the present invention will be described with reference to the illustrated embodiment, it should be understood that the present invention can be embodied in many alternate forms of embodiments. In addition, any suitable size, shape or type of elements or materials could be used.

The system 40 includes a plurality of LEDs indicated, respectively, by reference numerals 42, 44, 46, although there may be as few as two LEDs or a very large number of LEDs. In order to provide adequate intensity of illumination, it may be desirable for each indicated LED to actually include four bulbs 48 in parallel as illustrated. In any event, each of the LEDs 42, 44, 46 is capable, when energized, of emitting light of a different optical wavelength, or color. For example, LED 42 may emit blue light, LED 44 may emit red light, and LED 46 may emit green light.

Each LED is energized by a suitable source of electromotive EMF 50 in series with a suitable protective resistance 52. A controller 54 which may be a custom integrated circuit operates the LEDs 42, 44, 46 in a coordinated manner to selectively project into a region of the display 20 light of a desired color different from any of the colors emitted by the individual LEDs.

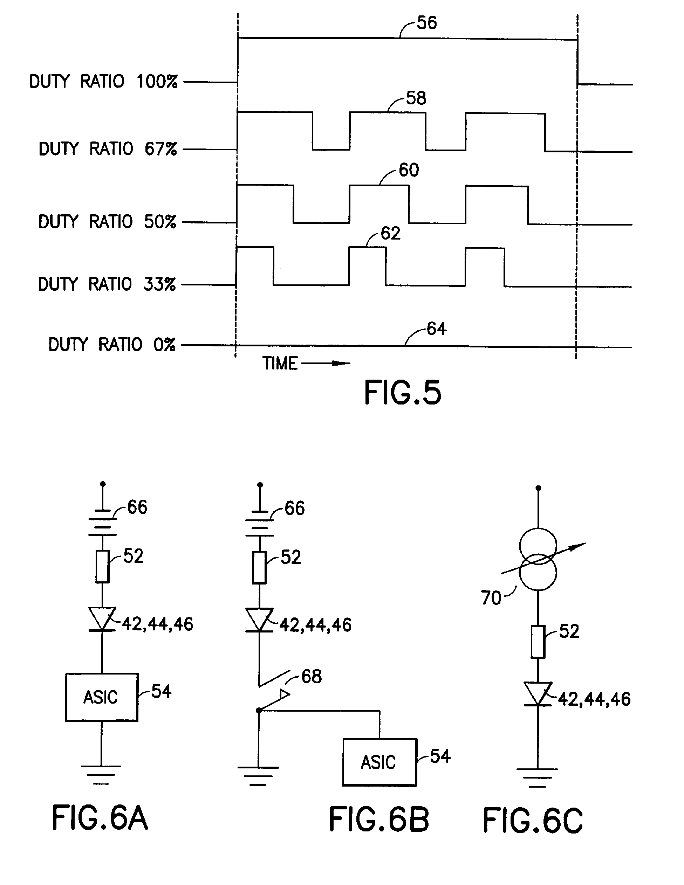

Thus, the controller 54 may operate the LEDs 42, 44, 46 according to a variety of duty ratios as typically presented in Fig. 5. Duty ratios indicate the on and off times for energizing an LED and by properly adjusting the duty ratios of the LEDs 42, 44, 46, a variety of desired colors can be generated for projection to the region of the display 20. As seen, then, in Fig. 5, a duty ratio of 100% represented by a curve 56 means that a particular LED is energized 100% of the time; a duty ratio of 67% represented by a curve 58 means that a particular LED is energized 67% of the time; a duty ratio of 50% represented by a curve 60 means that a particular LED is energized 50% of the time; a duty ratio of 33% represented by a curve 62 means that a particular LED is energized 33% of the time; and a duty ratio of 0% represented by a curve 64 (the abscissa) means that a particular LED is energized 0% of the time.

The duty ratios presented in Fig. 5, or any others which may be determined to be desirable, are applied by a user interface such as the keys 22a, 22b. As illustrated in Fig. 3, the keys 22a, 22b are connected to the controller or ASIC 54 for adjusting the duty ratios for the LEDs 42, 44, 46 so as to thereby project into the region of the display 20 light of the desired color.

To this end, the controller 54 is operable to adjust the current flow to each of the LEDs 42, 44, 46 so as to project into the region of the display 20 light of the desired third color. As schematically illustrated in Fig. 6A, this may be accomplished by applying a constant source of EMF 66 while the controller operates a switch internal to the controller or ASIC 54 according to a predetermined open/closed schedule. Fig. 6B illustrates a slightly different arrangement in which the switch 68 is controlled by the ASIC 54 but the LED current is not directed through the ASIC. Alternatively, but not exhaustive of the ways this desired result can be accomplished, this may be accomplished by an adjustable current source 70, as schematically illustrated in Fig. 6C.

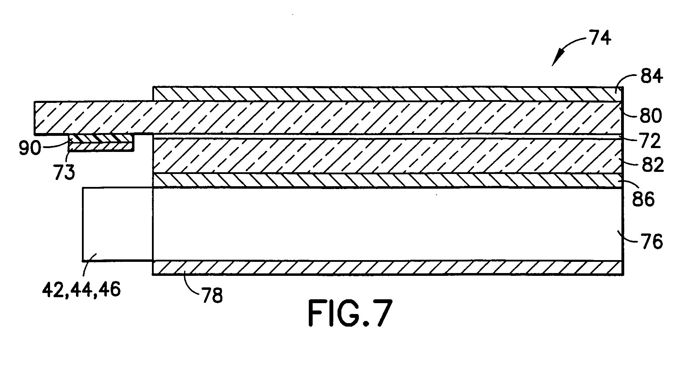

Turning now to Fig. 7, a display module 20A is diagramatically illustrated and is intended to present physically what has previously been referred to as display 20 for displaying information pertinent to the operation of the electronic device 10. As illustrated, the display module 20A includes an LCD 72, with a suitable driver 73, having a display region 74 for displaying the information pertinent to the operation of the electronic device. A light guide 76 receives the colored light from the LEDs 42, 44, 46 and projects it onto the display region 74 of the LCD with the aid of a reflector 78. The display module 20A also includes an upper glass sheet 80 overlying the LCD 72 and a lower glass sheet 82 intermediate the light guide 76 and the LCD. Upper and lower polarizers 84, 86 sandwich the glass sheets and the LCD between them. To further improve the quality of the resulting color illumination, a diffuser 88 is desirably provided intermediate the light guide 76 and the glass sheet 82. The driver 73 may be on the upper or lower glass sheets, 80, 82, or on flex 90 which is connected to the glass, or on the printed wiring board (PWB). If the driver is on the PWB, the connection between the PWB and the LCD 72 can be accomplished, for example, by elastomer or flex.

The term "display region" being illuminated need not be limited to the conventional display but may also be applicable to other components of an electronic device such as the keypad 22. Also, the controller 54 may be suitably programmed to cause a resulting color to be displayed, for example, as the result of a particular type of call, or a call from a particular source, or even to indicate a particular mode of operation of the mobile station 10. Such a mode of operation may be, for example, an incoming call, an outgoing call, roaming, or charging.

While embodiments of the invention have been disclosed in detail, it should be understood by those skilled in the art that various other modifications may be made to the illustrated embodiments without departing from the scope of the invention as described in the specification and defined in the appended claims.

## Claims

**1.** A system for controlling color illumination of a display region for an electronic device comprising:
an EMF source;
a first LED for emitting light of a first color;
a second LED for emitting light of a second color; and
a controller for operating the first LED and the second LED in a coordinated manner to selectively project into a region of the display light of a desired third color different from either the first color or the second color.

**2.** A system according to claim 1 including:
a user interface connected to the controller for adjusting the duty ratios for the first LED and for the second LED so as to project into the region of the display light of the desired third color.

**3.** A system according to claim 1 or 2
wherein the controller includes means for adjusting current flow to each of the LEDs so as to project into the region of the display light of the desired third color.

**4.** A system according to any preceding claim including:
a display module for displaying information pertinent to the operation of the electronic device.

**5.** A system according to claim 4
wherein the display module includes:
an LCD having a display region for displaying the information pertinent to the operation of the electronic device;
a light guide for projecting light from the first LED and from the second LED to the display region of the LCD; and
a reflector for projecting light from the light guide into the display region of the LCD.

**6.** A system according to claim 5 wherein the display module includes:
a first glass sheet overlying the LCD; and
a second glass sheet intermediate the light guide and the LCD.

**7.** A system according to claim 6 including:
a diffuser intermediate the light guide and the second glass sheet.

**8.** A system for controlling color illumination of a display region for an electronic device comprising:
an EMF source;
a plurality of LEDs, each emitting light of a different color; and
a controller for operating all of the LEDs in a coordinated manner to selectively project into a region of the display light of a desired final color different from the colors emitted by any one of the plurality of LEDs.

**9.** A system for controlling color illumination of a display region for an electronic device comprising:
an EMF source;
a first layer of luminescent material for emitting light of a first color;
a second layer of luminescent material for emitting light of a second color; and
a controller for operating the first layer and the second layer in a coordinated manner to selectively project into a region of the display light of a desired third color different from either the first color or the second color.

**10.** A system according to claim 9 including:
a user interface connected to the controller for adjusting the duty ratios for the first layer of luminescent material and for the second layer of luminescent material so as to project into the region of the display light of the desired third color.

**11.** A system according to claim 9 or 10
wherein the controller includes means for adjusting current flow to each of the first layer of luminescent material and the second layer of luminescent material so as to project into the region of the display light of the desired third color.

**12.** A system according to claim 9, 10 or 11 including:
a display module for displaying information pertinent to the operation of the electronic device.

**13.** A system according to claim 12
wherein the display module includes:
an LCD having a display region for displaying the information pertinent to the operation of the electronic device;
a light guide for projecting light from the first layer and from the second layer to the display region of the LCD; and
a reflector for projecting light from the light guide into the display region of the LCD.

**14.** A system according to claim 13 wherein the display module includes:
a first glass sheet overlying the LCD; and
a second glass sheet intermediate the light guide and the LCD.

**15.** A system according to claim 14 including:
a diffuser intermediate the light guide and the second glass sheet.

**16.** A method of controlling color illumination of a display region for an electronic device comprising the steps of:
(a) providing a first LED emitting light of a first color;
(b) providing a second LED emitting light of a second color;
(c) operating the first LED and the second LED in a coordinated manner to selectively project into a region of the display light of a desired third color different from either the first color or the second color.

**17.** A method according to claim 16 including the step of:
(d) adjusting the duty ratios for the first LED and for the second LED so as to project into the region of the display light of the desired third color.

**17.** A method according to claim 15 including the step of:
(d) adjusting current flow to each of the first LED and the second LED so as to project into the region of the display light of the desired third color.

**18.** An electronic device with a display (20) for displaying information pertinent to operation of the device, a plurality of electrically driven luminescent devices (42, 44, 46) operable to illuminate the display with light of respective individual different colors, and **characterised by** a controller (54) configured to control operation of the luminescent devices collectively so that the display is illuminated with light of a selectable resultant color different from the individual colors produced by the luminescent devices
